# EUROPÄISCHE PATENTSCHRIFT

(11) **EP 4 451 922 B1**
(45) Veröffentlichungstag und Bekanntmachung des Hinweises auf die Patenterteilung: **17.09.2025**
(21) Anmeldenummer: 22818706.8
(22) Anmeldetag: 18.11.2022
(51) Int. Cl.: A23P 20/25, B60N 3/16, A21C 15/00

(54) **VERFAHREN ZUM BETREIBEN EINER LEBENSMITTELZUBEREITUNGSVORRICHTUNG SOWIE LEBENSMITTELZUBEREITUNGSVORRICHTUNG FÜR EIN KRAFTFAHRZEUG**
METHOD FOR USING A FOOD PROCESSING DEVICE AND FOOD PROCESSING DEVICE FOR A MOTOR VEHICLE
PROCEDE D'UTILISATION D'UN DISPOSITIF DE TRAITEMENT DES ALIMENTS ET DISPOSITIF DE TRAITEMENT DES ALIMENTS POUR UN VEHICULE MOTORISE

(30) Priorität: 21.12.2021 DE 102021133966
(43) Veröffentlichungstag der Anmeldung: 30.10.2024
(73) Patentinhaber: AUDI AG, 85057 Ingolstadt (DE)
(72) Erfinder: HÉLOT, Jacques, 85051 Ingolstadt (DE); WALL, Christian, 85122 Hitzhofen (DE)
(86) Internationale Anmeldenummer: PCT/EP2022/082409
(87) Internationale Veröffentlichungsnummer: WO 2023/117233

(56) Entgegenhaltungen:
- WO-A1-2005/011387
- DE-A1- 102019 208 535
- DE-A1- 102019 212 635
- FR-A1- 2 955 016
- US-A- 5 359 925
- US-A1- 2013 330 448

## Beschreibung

Die Erfindung betrifft ein Verfahren zum Betreiben einer Lebensmittelzubereitungsvorrichtung für ein Kraftfahrzeug. Die Erfindung betrifft auch eine entsprechende Lebensmittelzubereitungsvorrichtung für ein Kraftfahrzeug. In der Erfindung geht es also darum, Lebensmittel zum Verzehr im Kraftfahrzeug selbst zubereiten zu können.

Neben der eigentlichen Fahraufgabe gibt es verschiedene Nebentätigkeiten, die in einem (Kraft-)Fahrzeug ausgeführt werden können. Dazu gehört zum Beispiel das Essen im Fahrzeug. Im Normalfall bereiten die Insassen ihr Essen vor und verzehren es beispielsweise bei einer Pause oder als Beifahrer während der Fahrt. Der Verzehr von frisch zubereiteten Mahlzeiten im Fahrzeug ist im Allgemeinen nicht möglich. Das heißt, das Essen wird außerhalb vom Fahrzeug besorgt oder zubereitet, also zum Beispiel gekocht. Zum Zeitpunkt des Verzehrs im Fahrzeug ist das Essen dann beispielsweise schon abgekühlt. Dabei verliert das Essen an Geschmack. Zudem kann der Verzehr von vorbereiteten Speisen mit Aufwand oder Verschmutzung verbunden sein. Zum Beispiel muss ein Insasse zum Verzehren eines Joghurts oder eines Salats zusätzlich Besteck mitführen. Gebäck, wie zum Beispiel Krapfen oder Semmeln, können beim Transport in einer Tüte oder beim Verzehr im Fahrzeug zerbröseln oder zerfallen. Ein süßes Gebäck hat zudem häufig eine klebrige und süße Außenhaut, wie zum Beispiel eine Lasur, ein Zuckerguss oder Zuckerstreusel, die beim Verzehr an den Fingern des Insassen haften bleiben kann. Dadurch können Verschmutzungen im Fahrzeug verursacht werden.

Neben selbst zubereiteten Speisen sind aus dem Stand der Technik allgemein verschiedene Möglichkeiten zur Lebensmittelherstellung bekannt.

Zum Beispiel offenbart die WO 2020/030628 A1 ein Herstellungsverfahren, bei dem ein dreidimensionaler Druckprozess eingesetzt wird, um ein Eiweißbasismaterial mit einer Flüssigkeit sowie Geschmacksstoffen zu versehen. Daraus wird ein druckbares Medium zu erzeugen, das zur Nachahmung eines vorgegebenen Lebensmittels, insbesondere Fleisch, genutzt wird.

Aus der US 2016/0135493 A1 ist ein Verfahren zur Herstellung von Lebensmitteln mittels einer additiven 3D-Drucktechnologie bekannt. Dabei werden Zutaten in Kapseln gezielt erhitzt und ausgegeben, um verschiedene Lebensmittelprodukte zu produzieren und rekreieren.

Die WO 2017/006330 A1 beschreibt ein Verfahren zum 3D-Druck von Lebensmitteln. In dem Verfahren wird ein nanokristallines Zelluloserohmaterial als Druckmaterial genutzt, das mit verschiedenartigen Eigenschaften, wie beispielsweise Geschmack, Textur und Aussehen, versehbar ist.

Solche Lebensmittel eignen sich jedoch in der Regel nicht für die Zubereitung im Kraftfahrzeug. Denn bei einem 3D-Druckverfahren ist ein stabiler und unbeweglicher Untergrund für das zu druckende Produkt notwendig. Bei einer Fahrt kann die geforderte Stabilität jedoch nicht gewährleistet werden. Es kann zu Erschütterungen oder Vibrationen kommen, durch die das Herstellungsprodukt verfälscht werden kann.

Die US 2013/0330448 A1 offenbart die elektronische Steuerung einer Behandlung einer einnehmbaren Substratstruktur gemäß Behandlungsanweisungsinformationen Dabei werden Materialien, wie beispielsweise eine Flüssigkeit, in jeweilige Abschnitte der einnehmbaren Substratstrukturen injiziert.

Die DE 10 2019 212 635 A1 offenbart eine Möglichkeit zum Bereitstellen einer Nährstoffzusammensetzung in einem Kraftfahrzeug abhängig von einem Ist-Nährstoffversorgungszustand eines Benutzers. Ausgehend von einer Mischanweisung wird eine Nährstoffzusammensetzung, beispielsweise als Lösung oder Gel, aus einem Nährstoffmedium zubereitet, die geeignet ist, einen Soll-Nährstoffzustand herbeizuführen.

Es ist die Aufgabe der vorliegenden Erfindung, eine Zubereitung von Lebensmitteln im Kraftfahrzeug zu ermöglichen und einen Aufwand beim Verzehr für einen Nutzer des Kraftfahrzeugs gering zu halten.

Die Aufgabe wird durch die Gegenstände der unabhängigen Patentansprüche gelöst. Vorteilhafte Weiterbildungen der Erfindung sind durch die abhängigen Patentansprüche, die Beschreibung sowie die Figuren offenbart.

Um eine wenig aufwendige Lebensmittelzubereitung in einem Kraftfahrzeug zu ermöglichen, schlägt die Erfindung ein Verfahren zum Betreiben einer Lebensmittelzubereitungsvorrichtung für ein Kraftfahrzeug vor. In dem Verfahren wird wenigstens ein Lebensmittelrohling bereitgestellt. Der Lebensmittelrohling umfasst eine Kernkomponente und eine die Kernkomponente umhüllende Hüllkomponente. Das heißt, der Lebensmittelrohling weist eine Hüllkomponente als Außenhülle für die Kernkomponente als Kern auf. Die Außenhülle umschließt den Kern dabei vollständig. Anders ausgedrückt, kann die Hüllkomponente mit der Kernkomponente befüllt sein.

Zum Anpassen oder Veredeln des Lebensmittelrohlings wird zumindest ein vorbestimmtes Injektionsmittel, also ein oder mehrere verschieden Injektionsmittel, bereitgestellt. Das Injektionsmittel ist zum Einspritzen in den Lebensmittelrohling geeignet. Das Injektionsmittel ist dazu ausgebildet, eine Farbe und/oder einen Geschmack, also ein Aroma, und/oder einen Nährwert des Lebensmittelrohlings zu verändern. Mit Nährwert ist vorliegend ein physiologischer Wert des Rohlings gemeint. Als Nährwert können somit zum Beispiel Vitamine oder Proteine oder ein Süßstoff oder ein vorbestimmter anderer Nährstoff zugesetzt werden. Das Einspritzen und Bereitstellen des Injektionsmittels kann beispielsweise mittels einer Injektionseinheit der Lebensmittelzubereitungsvorrichtung durchgeführt werden.

Um zu bestimmen, wo genau in dem Lebensmittelrohling das Injektionsmittel eingespritzt wird, wird in Abhängigkeit von einem vorgegebenen Auswahlkriterium eine Injektionstiefe zum Einspritzen vorgegeben. Durch die Injektionstiefe wird dabei vorgegeben, ob das Injektionsmittel entweder in die Kernkomponente oder in die Hüllkomponente eingespritzt werden soll. Das Auswahlkriterium gibt somit vor, in welchem Teil des Rohlings welche Veränderung mittels des Injektionsmittels vorgenommen werden soll. Das heißt, gemäß dem Auswahlkriterium kann eingestellt werden, ob zum Beispiel der Kern (Kernkomponente) oder die Hülle (Hüllkomponente) veredelt oder angepasst werden soll. Die Injektionstiefe beschreibt vorliegend somit eine Injektionsstelle oder ein Einspritzort in einem Volumenkörper des Lebensmittelrohlings relativ zu dessen Oberfläche. Zum Vorgeben der Injektionstiefe für die Injektionseinheit zum Einspritzen kann zum Beispiel eine Steuereinrichtung der Lebensmittelzubereitungsvorrichtung eingesetzt werden.

Anschließend wird das jeweilige Injektionsmittel in der vorgegebenen Injektionstiefe in den Lebensmittelrohling eingespritzt. Dazu kann die vorgenannte Injektionseinheit genutzt werden. Zum Betreiben oder Steuern der Injektionseinheit kann die Steuereinrichtung zum Beispiel Steuerdaten umfassen. Die Steuerdaten können eine Tiefeninformation, in der die Injektionstiefe gespeichert ist, aufweisen. Um die Injektionstiefe passend einzustellen, kann der Steuereinrichtung zum Beispiel eine Geometrie oder Form des Rohlings, wie zum Beispiel eine Dicke der Hülle und eine Geometrie des Kerns, bekannt sein.

Durch das beschriebene Verfahren ergibt sich der Vorteil, dass im Kraftfahrzeug, zum Beispiel während der Fahrt, Lebensmittel zum Verzehr zubereitet werden können. Dadurch braucht der Insasse oder Nutzer das Lebensmittel nicht von außerhalb mitbringen, sodass ein Geschmacksverlust vermieden werden kann. Zudem braucht sich der Insasse vor dem Fahrantritt auch nicht zusätzlich um Lebensmittel und deren Zubereitung kümmern. Somit ist die erfindungsgemäße Lebensmittelzubereitungsmethode für den Nutzer weniger aufwendig. Des Weiteren kann der Nutzer die Eigenschaften des Lebensmittelrohlings individualisieren. Das heißt, der Geschmack, die Farbe und die Nahrhaftigkeit können gemäß dem vorgenannten Auswahlkriterium individuell eingestellt werden.

Der Lebensmittelrohling ist vorliegend ein essbares, also zum Verzehr geeignetes Nahrungsmittel. Der Rohling kann zum Beispiel einen vorgegebenen Formkörper, also eine vorbestimmte Form oder Dimension oder Geometrie, aufweisen. Zum Beispiel kann der Rohling als Quader mit einer Kantenlänge von 2 bis 3 Zentimetern oder als eine Kugel mit einem Durchmesser von 2 bis 3 Zentimetern vorliegen. Somit kann die Geometrie des Formkörpers an genau einen Verzehrvorgang angepasst sein. Das heißt, der Nutzer kann den fertiggestellten Lebensmittelrohling mit einem Mal verzehren und braucht zum Beispiel nicht abbeißen. Somit braucht der Nutzer zum Verzehren zum Beispiel kein Besteck mitführen. Zudem kann eine Verschmutzung des Fahrzeugs zum Beispiel durch Bröseln vermieden werden. Die Hüllkomponente kann zum Beispiel eine Dicke von 0,1 bis 1 Millimeter aufweisen. Alternativ ist zum Beispiel eine Dicke bis etwa 5 Millimeter zum Beispiel von 2 Millimeter oder 3 Millimeter möglich. Um dem Nutzer die größtmögliche Freiheit bei der Veredelung des Lebensmittelrohlings zu lassen, kann der Rohling einen vorgegebenen Basisgeschmack und eine vorgegebene Basisfarbe aufweisen. Der Basisgeschmack und die Basisfarbe können zum Beispiel neutral, das heißt im Wesentlichen geschmacklos beziehungsweise farblos, sein. Der Lebensmittelrohling kann zum Beispiel aus einem essbaren, also zum verzehrgeeigneten Polymer gebildet sein. Das Polymer kann zum Beispiel eine Proteinstruktur umfassen und beispielsweise aus Kasein hergestellt sein.

Das Injektionsmittel kann vorliegend als Zusatzstoff verstanden werden. Zum Beispiel kann das Injektionsmittel in Form einer Flüssigkeit oder eines Gels (viskoelastischer Stoff) vorliegen. Bei oder nach der Injektion kann sich das Injektionsmittel zum Beispiel vollständig mit der Struktur der Hüllkomponente beziehungsweise der Kernkomponente verbinden oder darin einbetten. Das Verbinden oder Einbetten kann zum Beispiel durch Kapillarwirkung oder Diffusion oder durch Mischung von der Injektionsstelle aus erfolgen. Das heißt, die Moleküle des Zusatzstoffs können durch die Moleküle der Hülle oder des Kerns wandern. Dabei verändert das Injektionsmittel die Materialeigenschaft und/oder Formstabilität des Lebensmittelrohlings nicht. Das heißt, durch das Einspritzen behält der Lebensmittelrohling seine ursprüngliche Materialeigenschaft, wie etwa einen Aggregatzustand und eine Formstabilität bei. Wie zuvor beschrieben, können verschiedene Typen von Injektionsmittel (Farbe, Geschmack, Nährwert) vorgesehen sein. Somit können verschiedene Wirkungen zur Veränderung oder Veredelung des Rohlings realisiert werden. Das jeweilige Injektionsmittel kann zum Beispiel genau eine Eigenschaft zum Verändern des Lebensmittelrohlings aufwiesen. Das heißt, das Injektionsmittel kann entweder die Farbe oder den Geschmack oder den Nährwert ändert. Alternativ kann das Injektionsmittel mehrere Eigenschaften zum Verändern aufweisen. Das heißt, das Injektionsmittel kann eine beliebige Kombination aus geschmacks-, farb- und nährwertverändernden Stoffen oder Materialien aufweisen.

Zum Einspritzen des Injektionsmittels kann wie zuvor beschrieben die Injektionseinheit vorgesehen sein. Die Injektionseinheit kann zum Beispiel wenigstens ein Injektionsmittelreservoir, also zum Beispiel einen Behälter oder Tank, zum Vorhalten oder Speichern oder Lagern des jeweiligen Injektionsmittels aufweisen. Dem jeweiligen Injektionsmittelreservoir kann ein Injektionselement zugeordnet sein. Das Injektionselement kann zum Beispiel eine Spritze oder eine Düse sein, die zum Einbringen in den Volumenkörper des Rohlings geeignet ist. Der Einspritzvorgang zum Einspritzen des Injektionsmittels kann zum Beispiel mittels bekannter Einspritz- oder Injektionsprinzipien, wie es zum Beispiel von Spritzen oder Injektoren bekannt ist, erfolgen.

Im Folgenden sind Ausführungsformen der Erfindung beschrieben, durch die sich zusätzliche Vorteile ergeben.

Gemäß einer Ausführungsform wird die Lebensmittelzubereitungsvorrichtung für die Zubereitung der Lebensmittelrohlinge in einem Fahrbetrieb des Kraftfahrzeugs mittels einer jeweiligen Kopplungseinrichtung mechanisch mit einer korrespondierenden oder zugeordneten Kopplungseinrichtung einer Fahrzeugkomponente des Kraftfahrzeugs gekoppelt. Durch die Kopplung ist die Lebensmittelzubereitungsvorrichtung in dem gekoppelten Zustand mit der jeweiligen Fahrzeugkomponente ortsfest fixiert.

Die Lebensmittelzubereitungsvorrichtung kann somit an einem vorgegebenen Einbauort zum Beispiel im Fahrzeuginnenraum angebracht oder verankert werden. Dadurch kann vermieden werden, dass sich die Lebensmittelzubereitungsvorrichtung im Fahrzeuginnenraum des Kraftfahrzeugs umherbewegen kann.

Die Fahrzeugkomponente zum Anbringen oder Fixieren kann zum Beispiel ein Kofferraum, eine Mittelkonsole, ein Fußraum oder eine Rückbank oder eine vorgegebene andere Fahrzeugkomponente im Fahrzeuginnenraum sein. Der Fahrbetrieb beschreibt vorliegend einen vorbestimmten Betriebsmodus des Kraftfahrzeugs, bei dem ein Nutzer das Kraftfahrzeug für einen vorbestimmten Zweck nutzt. Der Fahrbetrieb kann somit zum Beispiel bei Fahren und/oder Parken und/oder Stehen des Kraftfahrzeugs betreffen.

Mit der ortsfesten Fixierung ist vorliegend gemeint, dass eine Bewegungsrichtung der Lebensmittelzubereitungsvorrichtung im gekoppelten Zustand in einem dreidimensionalen Raum in mehreren Freiheitsgraden, also zum Beispiel fünf oder sechs Freiheitsgraden, zumindest eingeschränkt oder vollständig verhindert ist. Die Kopplungseinrichtungen können im gekoppelten Zustand zum Beispiel zum Ausbilden einer Rastverbindung und/oder einer Schraubverbindung und/oder einer sonstigen vorgegebenen Verbindung eingerichtet sein. Zum Beispiel können die Kopplungseinrichtungen ein Schienensystem mit Verrastung ausbilden, sodass die Lebensmittelzubereitungsvorrichtung ähnlich wie bei einem Schubfachsystem auf die Fahrzeugkomponente aufgeschoben und dadurch gekoppelt werden kann.

Neben der mechanischen Kopplung kann mittels der Kopplungseinrichtung zusätzlich auch eine elektrische Kopplung der Lebensmittelzubereitungsvorrichtung an das Kraftfahrzeug realisiert werden. Somit kann die Lebensmittelzubereitungsvorrichtung im gekoppelten Zustand mit der Kopplungseinrichtung zum Beispiel an ein Energieversorgungssystem des Kraftfahrzeugs, wie zum Beispiel einen Fahrzeugenergiespeicher, also beispielsweise eine Bordbatterie, angeschlossen werden. Beim Koppeln der Kopplungseinrichtung kann somit automatisch auch eine elektrisch leitende Verbindung für die Energie- oder Stromversorgung der Lebensmittelzubereitungsvorrichtung hergestellt werden. Zusätzlich oder alternativ kann die Lebensmittelzubereitungsvorrichtung auch eine eigene oder eigenständige Energieversorgungseinrichtung umfassen. Somit kann die Lebensmittelzubereitungsvorrichtung bei Bedarf zum Beispiel als eigenständiges Gerät außerhalb des Kraftfahrzeugs benutzt werden.

Im Zusammenhang mit der möglichen Eigenständigkeit der Lebensmittelzubereitungsvorrichtung ist in einer weiteren Ausführungsform vorgesehen, dass mittels einer Verriegelungseinheit der Kopplungseinrichtung durch den Nutzer die Lebensmittelzubereitungsvorrichtung von der Fahrzeugkomponente entriegelbar und/oder verriegelbar ist. Anders ausgedrückt, ist die ortsfeste Fixierung reversibel ausgebildet. Das heißt, die Kopplungseinrichtungen sind lösbar gekoppelt. Das Lösen kann erfolgen, indem der Nutzer die Verriegelungseinheit mittels einer vorgegebenen Bedienhandlung bedient. Die Verriegelungseinheit kann zum Beispiel durch einen Hebel oder Griff an der Lebensmittelzubereitungsvorrichtung beziehungsweise der Kopplungseinrichtung zum Lösen der Kopplung ausgebildet sein. Alternativ kann ein zusätzliches Entriegelungselement für die Ver- oder Entriegelung vorgesehen sein. Zum Beispiel kann der Nutzer als Entriegelungselement einen Schlüssel oder Schraubenschlüssel nutzen.

Gemäß einer weiteren Ausführungsform wird zum Einspritzen einer Vielzahl an verschiedenen Injektionsmitteln, also den vorgenannten Injektionsmitteltypen, bereitgestellt. In Abhängigkeit von dem vorgegebenen Auswahlkriterium wird eines oder werden mehrere der Vielzahl an Injektionsmitteln zum Einspritzen entweder in die Hüllkomponente oder in die Kernkomponente vorgegeben oder ausgewählt. Das Vorgeben oder Auswählen kann beispielsweise mittels der Steuereinrichtung erfolgen. Dadurch kann das gewünschte Injektionsmittel und/oder die gewünschte Mischung an Injektionsmitteln festgelegt werden. Das Mischen von mehreren Injektionsmitteln unterschiedlicher Art kann zum Beispiel vor dem Einspritzen erfolgen. Alternativ können die gewählten Injektionsmitteltypen einzeln eingespritzt werden, sodass die Vermischung der Injektionsmittel erst im Rohling erfolgt. Zum Aufbewahren oder Halten der Vielzahl an verschiedenen Injektionsmitteln kann die Injektionsmitteleinheit eine entsprechende Vielzahl an verschiedenen Injektionsmittelreservoirs oder Behälter aufweisen.

Mit verschiedenen Injektionsmitteln ist vorliegend gemeint, dass zum Beispiel unterschiedliche Injektionsmitteltypen, also zum Beispiel ein Injektionsmittel für die Farbe, ein anderes Injektionsmittel für den Geschmack und ein weiteres Injektionsmittel für den Nährwert, vorgesehen sein kann. Für jeden Injektionsmitteltyp können unterschiedliche Untertypen oder Unterarten vorgesehen sein. Somit können zum Beispiel mehrere Injektionsmittel eines Typs mit unterschiedlichen Farben und/oder unterschiedlichen Geschmacksrichtungen und/oder unterschiedlichen Nährwerten bereitgestellt werden.

Zusätzlich oder alternativ zu der Auswahl zwischen der Vielzahl an Injektionsmitteln kann in Abhängigkeit von dem vorgegebenen Auswahlkriterium mittels der Steuereinrichtung zum Beispiel eine Injektionsdosis oder Menge des jeweiligen Injektionsmittels zum Einspritzen vorgegeben werden. Das heißt, es kann eingestellt werden, wie viel, also zum Beispiel welche Masse oder welches Volumen von dem jeweiligen Injektionsmittel, in den Lebensmittelrohling eingespritzt werden soll.

In den folgenden weiteren Ausführungsformen geht es nun darum, wie das Auswahlkriterium vorgegeben sein kann.

Zum Beispiel kann das Auswahlkriterium durch Eingabedaten einer Nutzereingabe vorgegeben sein. Dazu ist in einer weiteren Ausführungsform vorgesehen, dass zum Vorgeben des Auswahlkriteriums Eingabedaten einer zugeordneten Eingabevorrichtung für das Kraftfahrzeug erfasst und ausgewertet werden. Den Eingabedaten liegt dabei eine Bedieneingabe eines Nutzers der Eingabevorrichtung zum Auswählen des jeweiligen Injektionsmittels und/oder der jeweiligen Injektionstiefe zugrunde.

Das heißt, der Nutzer selbst kann auswählen, wie der Rohling verändert werden soll. Es kann somit eine individualisierte Veredelung erfolgen. Die Eingabedaten können zum Beispiel mittels einer Steuerelektronik der Eingabevorrichtung aus der Bedieneingabe ermittelt werden. Die Eingabedaten können somit die Eindringtiefe und/oder den Injektionsmitteltyp vorgeben. Die erfassten Eingabedaten können zum Beispiel von der Steuereinrichtung erfasst und ausgewertet werden, um Steuerdaten für die Injektionseinheit bereitzustellen.

Die Eingabevorrichtung kann zum Beispiel ein Display oder Multimediainterface des Kraftfahrzeugs selbst sein. Zusätzlich oder alternativ kann die Eingabevorrichtung ein mobiles Endgerät, wie zum Beispiel ein Smartphone oder Tablet, sein. Denkbar ist alternativ die Ausbildung der Eingabevorrichtung als integraler Bestandteil der Lebensmittelzubereitungsvorrichtung. Somit kann die Eingabevorrichtung zum Beispiel ein Display mit Touchfunktion (berührungsfähiges Display) der Lebensmittelzubereitungsvorrichtung sein. Zur Übertragung der Eingabedaten, also zur Kommunikation der Lebensmittelzubereitungsvorrichtung mit der Eingabevorrichtung, kann die Lebensmittelzubereitungsvorrichtung zum Beispiel eine Kommunikationsschnittstelle, wie zum Beispiel ein Bluetoothmodul oder Funkmodul oder Mobilfunkmodul, aufweisen. Alternativ kann die Kommunikationsschnittstelle beispielsweise zur kabelgebundenen Datenübertragung ausgebildet sein. Dazu kann das Kommunikationsmodul zum Beispiel von der Kopplungseinrichtung umfasst sein. Beim Koppeln über die Kopplungseinrichtung kann somit automatisch auch eine Kommunikationsverbindung mit der Eingabevorrichtung hergestellt werden.

Zusätzlich oder alternativ kann das Auswahlkriterium zum Beispiel durch eine Zuordnungsvorschrift vorgegeben sein. Dazu ist in einer weiteren Ausführungsform vorgesehen, dass zum Vorgeben des Auswahlkriteriums eine vorgegebene Zuordnungsvorschrift berücksichtigt wird. Gemäß der Zuordnungsvorschrift ist ein jeweiliges Injektionsmittel zum Verändern der Farbe dabei nur der Hüllkomponente zugeordnet und ein jeweiliges Injektionsmittel zum Verändern des Geschmacks und/oder des Nährwerts ist nur der Kernkomponente zugeordnet. Die Zuordnungsvorschrift kann somit den Injektionsmitteltyp oder Untertyp und die Eindringtiefe beschreiben. Es kann also eine gezielte Veredelung oder Veränderung des Lebensmittelrohlings realisiert werden. Die Zuordnungsvorschrift kann zum Beispiel als Datensatz wie etwa eine Tabelle oder Look-up-Tabelle vorliegen. Diese kann in einer Speichereinrichtung der Lebensmittelzubereitungsvorrichtung hinterlegt oder gespeichert sein. Zum Bestimmen und Festlegen der Eindringtiefe kann die Zuordnungsvorschrift mittels der Steuereinrichtung aus der Speichereinrichtung geladen und verarbeitet werden.

Gemäß einer weiteren Ausführungsform stellt die Hüllkomponente eine Materialzusammensetzung bereit, die formstabiler ist als eine Materialzusammensetzung der Kernkomponente. Somit kann die Hüllkomponente eine stabile Außenhülle zum Halten der Kernkomponente bilden. Anders ausgedrückt, kann die Hüllkomponente wenigstens ein erstes Material oder eine erste Materialzusammensetzung umfassen. Die Kernkomponente umfasst hingegen wenigstens ein zweites Material oder eine zweite Materialzusammensetzung. Bei der jeweiligen Materialzusammensetzung kann es sich zum Beispiel um einen Einzelstoff aus gleichartigen Molekülen oder um einen Verbundstoff oder eine Stoffzusammensetzung aus verschiedenen Molekülen handeln. Die Materialzusammensetzung der Hüllkomponente und der Kernkomponente sind dabei verschieden, das heißt sie setzen sich aus unterschiedlichen Stoffzusammensetzungen oder Einzelstoffen zusammen. Die unterschiedliche Formstabilität kann zum Beispiel durch unterschiedliche Aggregatszustände oder Materialeigenschaften realisiert sein. Zum Beispiel kann die Materialzusammensetzung der Hüllkomponente fest sein, während die Materialzusammensetzung der Kernkomponente viskos oder flüssig ist. Alternativ sind natürlich auch gleichartige Aggregatszustände für die Materialien der Hülle des Kerns denkbar. Zum Beispiel können sowohl der Kern als auch die Hülle an sich viskoelastisch, also gelartig, ausgebildet sein. Dabei ist jedoch die Struktur der Hülle fester ist als die des Kerns.

Gemäß einer weiteren Ausführungsform wird zum Einspritzen des jeweiligen Injektionsmittels für die Hüllkomponente zumindest eine vorgegebene Injektionsposition bereitgestellt, an welcher jeweils eine vorgegebene Materialverjüngung vorgesehen ist. Das heißt, die Hüllkomponente kann einen oder mehrere Injektionspositionen oder Injektionspunkte aufweisen. Die Injektionsposition(en) können sich zum Beispiel an einer jeweiligen Seitenfläche der Oberfläche des Formkörpers des Rohlings befinden. Zum Umsetzen der Materialverjüngung kann die Hüllkomponente an der Oberfläche zum Beispiel eine Vertiefung oder Aussparung aufweisen. Das heißt, es kann eine geringere Dicke oder Wandstärke der Hüllkomponente vorgesehen sein. In Abhängigkeit von der Eindringtiefe, können zum Beispiel unterschiedliche Injektionspositionen vorgesehen sein. Eine Injektionsposition für die Hülle kann sich beispielsweise im Randbereich der jeweiligen Seitenfläche befinden, während eine Injektionsposition für den Kern in Zentrum oder Mittelbereich angeordnet ist. Somit kann durch die Injektionsposition vorgegeben sein, ob das jeweilige Injektionsmittel in den Kern oder die Hülle injiziert wird.

Gemäß einer weiteren Ausführungsform wird der Lebensmittelrohling in Abhängigkeit von dem vorgegebenen Auswahlkriterium auf einen vorgegebenen Temperaturwert erhitzt. Dazu kann die Lebensmittelzubereitungsvorrichtung zum Beispiel eine Erhitzungseinheit umfassen. Mittels der Steuereinrichtung kann zum Beispiel in Abhängigkeit von dem vorgegebenen Auswahlkriterium der Temperaturwert für die Erhitzungseinheit zum Erhitzen vorgegeben werden.

Hierdurch ergibt sich der Vorteil, dass der Lebensmittelrohling zum Beispiel nach der Veränderung oder Veredelung erwärmt werden kann. Dadurch kann der Verzehrgenuss für den Nutzer verbessert werden. Zusätzlich können dadurch zum Beispiel Aromen oder Geschmacksstoffe besser hervorgehoben oder es können zusätzliche Aromen erzeugt werden. Zum Beispiel kann durch das Erhitzen die Hüllkomponente fester oder knuspriger gemacht werden.

Die Erhitzungseinheit kann somit als Kochkammer zum Beispiel nach dem Prinzip eines Backofens verstanden werden. In dieser kann der Lebensmittelrohling erwärmt und/oder gegrillt und/oder gebacken und/oder gedämpft werden. Das Erwärmen kann vor oder nach dem Einspritzen des jeweiligen Injektionsmittels erfolgen.

Die Erfindung betrifft auch eine Lebensmittelzubereitungsvorrichtung für ein Kraftfahrzeug. Die Lebensmittelzubereitungsvorrichtung weist wenigstens einen Lebensmittelrohling mit einer Kernkomponente und einer die Kernkomponente umhüllenden Hüllkomponente auf. Zum Vorhalten oder Lagern kann die Lebensmittelzubereitungsvorrichtung zum Beispiel einen Vorratsbehälter aufweisen, in welchem ein oder mehrere solcher Lebensmittelrohlinge bis zur gewünschten Verarbeitung oder Veredelung aufbewahrt werden können. Der Vorratsbehälter kann zum Beispiel eine integrierte Kühleinrichtung zum Kühlen des vorgehaltenen Rohlings aufweisen. Somit kann ein Verderben des jeweiligen Rohlings vermieden werden. Des Weiteren umfasst die Lebensmittelzubereitungsvorrichtung eine Injektionseinheit zum Einspritzen oder Injizieren des zumindest einen vorbestimmten Injektionsmittels in den Lebensmittelrohling. Das jeweilige Injektionsmittel ist zum Verändern einer Farbe und/oder eines Geschmacks und/oder eines Nährwerts des Lebensmittelrohlings ausgebildet. Das jeweilige Injektionsmittel kann, wie zuvor beschrieben, somit von einem unterschiedlichen Typ (Farbe, Geschmack, Nährwert) sein. Innerhalb der Injektionsmitteltypen können verschiedene Untertypen (unterschiedliche Farben, unterschiedliche Geschmäcker, unterschiedliche Nährwerte) vorgesehen sein.

Zum Einspritzen des Injektionsmittels kann die Injektionseinheit zum Beispiel in einer Injektionskammer der Lebensmittelzubereitungsvorrichtung angeordnet sein. Die Injektionskammer kann zum Beispiel durch den vorgenannten Vorratsbehälter umgesetzt sein. Alternativ kann die Injektionskammer durch einen separaten Behälter realisiert sein.

Um eine Injektionstiefe für die Injektionseinheit festzulegen oder vorzugeben, umfasst die Lebensmittelzubereitungsvorrichtung eine Steuereinrichtung. Diese ist ausgebildet, in Abhängigkeit von einem vorgegebenen Auswahlkriterium die Injektionstiefe zum Einspritzen des jeweiligen Injektionsmittels in die Kernkomponente und/oder die Hüllkomponente vorzugeben. Die Steuervorrichtung kann eine Datenverarbeitungsvorrichtung oder eine Prozessoreinrichtung aufweisen, die dazu eingerichtet ist, eine die entsprechenden Schritten des zuvor beschriebenen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die entsprechenden Verfahrensschritte durchzuführen. Der Programmcode kann in einem Datenspeicher der Prozessoreinrichtung gespeichert sein.

Die Erfindung kann auch ein Kraftfahrzeug mit einer entsprechenden Lebensmittelzubereitungsvorrichtung umfassen. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Lebensmittelzubereitungsvorrichtung ist dabei wie zuvor beschrieben zum Beispiel an einer Fahrzeugkomponente des Kraftfahrzeugs befestigbar oder koppelbar ausgebildet. Die Fahrzeugkomponente befindet sich dabei bevorzugt in einem Fahrzeuginnenraum des Kraftfahrzeugs.

Zu der Erfindung gehören auch Weiterbildungen des erfindungsgemäßen Kraftfahrzeugs und der erfindungsgemäßen Lebensmittelzubereitungsvorrichtung, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs und der erfindungsgemäßen Lebensmittelzubereitungsvorrichtung hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: in schematischer Darstellung ein Kraftfahrzeug mit einer Lebensmittelzubereitungsvorrichtung zum Zubereiten eines Lebensmittelrohlings;
- Fig. 2: eine schematische Darstellung der Zubereitung des Lebensmittelrohlings; und
- Fig. 3: eine schematische Darstellung eines beispielhaften Verfahrensablaufs zum Zubereiten des Lebensmittelrohlings mit der Lebensmittelzubereitungsvorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

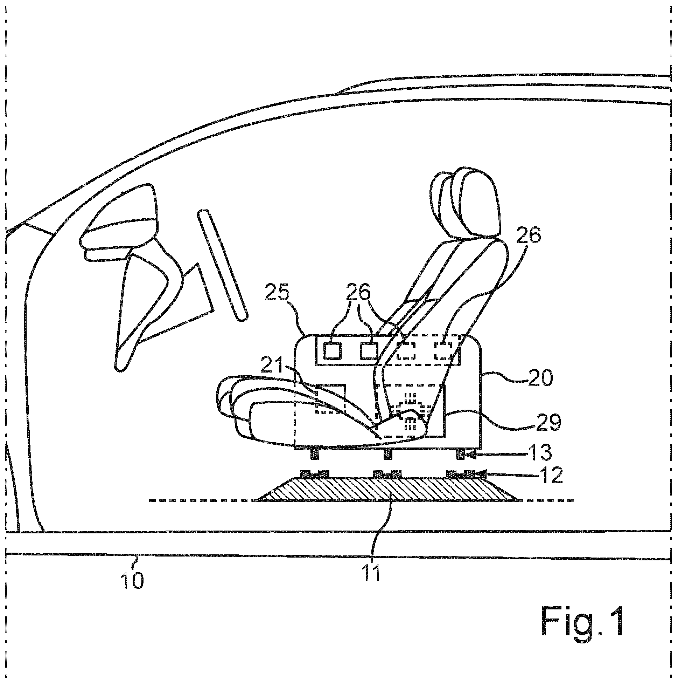

Fig. 1 zeigt eine schematische Darstellung eines Ausschnittes eines Kraftfahrzeugs 10 im Frontbereich aus einer Seitenansicht in einer Schnittdarstellung. Das Kraftfahrzeug 10 umfasst eine Lebensmittelzubereitungsvorrichtung 20. Mit der Lebensmittelzubereitungsvorrichtung 20 kann in dem Kraftfahrzeug während der Nutzung, also zum Beispiel bei einer Fahrt oder, wenn das Kraftfahrzeug 10 zum Beispiel abgestellt oder geparkt ist, ein Lebensmittel für einen Nutzer (in Fig. 1 nicht dargestellt) automatisch zubereitet werden. Die Lebensmittelzubereitungsvorrichtung 20 ist, wie beispielhaft gezeigt, im Bereich einer Mittelkonsole als Fahrzeugkomponente 11 zwischen einem Fahrersitz und einem Beifahrersitz angeordnet. Alternativ sind natürlich auch andere Einbauorte, wie zum Beispiel eine Rückbank oder ein Kofferraum des Kraftfahrzeugs 10, denkbar. Die Lebensmittelzubereitungsvorrichtung 20 kann in ihrer Dimension oder Geometrie entsprechend zum Beispiel an den verfügbaren Platz oder Bauraum am gewünschten Einbauort angepasst sein.

Damit die Lebensmittelzubereitungsvorrichtung 20 auch bei Fahrmanövern sicher genutzt werden kann, kann sie mit der jeweiligen Fahrzeugkomponente 11, vorliegend also beispielsweise mit der Mittelkonsole, ortsfest fixiert werden. Dazu umfasst die Lebensmittelzubereitungsvorrichtung 20 eine Kopplungseinrichtung 13. Die Fahrzeugkomponente 11 umfasst eine korrespondierende oder zugeordnete Kopplungseinrichtung 12. Durch Verbinden der beiden Kopplungseinrichtungen 12, 13 können die Lebensmittelzubereitungsvorrichtung 20 und die Fahrzeugkomponente 11 miteinander gekoppelt werden. Durch die Kopplung kann sich zum Beispiel eine formschlüssige und/oder kraftschlüssige Verbindung ergeben. Vorliegend ist die Kopplungseinrichtung 13 zum Beispiel als Stift ausgebildet. Die Kopplungseinrichtung 12 ist entsprechend als Aufnahmeöffnung für den entsprechenden Stift ausgebildet. Beim Einbringen des jeweiligen Stifts in die entsprechende Aufnahmeöffnung kann es zum Beispiel zu einer Rastverbindung kommen. Natürlich sind auch andere Kopplungs- oder Verbindungsmöglichkeiten für die Lebensmittelzubereitungsvorrichtung 20 mit der Fahrzeugkomponente 11 denkbar. Zum Beispiel können die Lebensmittelzubereitungsvorrichtung 20 und die Fahrzeugkomponente 11 mittels Schraubverbindung oder zum Beispiel durch Aufschieben oder Einschieben eines entsprechenden Einschubelements in ein korrespondierendes Gegenstück miteinander gekoppelt werden. Durch die ortsfeste Fixierung ist somit die Bewegungsrichtung der Lebensmittelzubereitungsvorrichtung 20 im dreidimensionalen Raum in allen Freiheitsgraden vollständig verhindert.

Um die Lebensmittelzubereitungsvorrichtung 20 zum Beispiel auch außerhalb des Kraftfahrzeugs 10 zur Lebensmittelzubereitung nutzen zu können, kann die Kopplungseinrichtung 13 eine Verriegelungseinheit (in Fig. 1 nicht dargestellt) aufweisen. Mit dieser kann der Nutzer die Kopplungseinrichtung 13 bei Bedarf entriegeln oder verriegeln. Somit kann eine reversible Fixierung bereitgestellt werden. Die Verriegelungseinheit kann zum Beispiel durch einen Hebel oder Griff bereitgestellt sein. Durch Betätigung der Verriegelungseinheit kann die Kopplung zwischen den Kopplungseinrichtungen 12 und 13 gelöst werden. Das heißt, vorliegend kann zum Beispiel eine Verrastung zwischen Stift und Einführöffnung entriegelt oder gelöst werden, sodass die Lebensmittelzubereitungsvorrichtung 20 einfach aus der Mittelkonsole entfernt werden kann.

Zum Zubereiten eines verzehrfertigen Lebensmittels umfasst die Lebensmittelzubereitungsvorrichtung 20 einen Lebensmittelrohling 21. Der Lebensmittelrohling 21 weist einen vorgegebenen Formkörper mit einer vorgegebenen Geometrie auf. In den Fig. weist der Formkörper des Lebensmittelrohlings 21 beispielhaft eine im Wesentlichen quaderförmige Grundform auf. Eine Kantenlänge des Lebensmittelrohlings 21 kann etwa 2 bis 3 Zentimeter betragen. Dadurch kann der Lebensmittelrohling 21 im Fahrbetrieb des Kraftfahrzeugs 10 vom Nutzer besonders einfach verzehrt werden. Der Lebensmittelrohling kann als Basiselement für eine Individualisierung durch den Nutzer dienen. Dazu kann der Lebensmittelrohling einen vorgegebenen Basisgeschmack, eine vorgegebene Basisfarbe und einen vorgegebenen Basisnährwert aufweisen. Zum Beispiel kann der Lebensmittelrohling aus einem essbaren, aber geschmacksneutralen Polymer mit durchsichtiger oder weißer Farbe ausgebildet sein. Der Formkörper des Lebensmittelrohlings 21 kann an sich formstabil sein, aber zum Beispiel eine viskoelastische, also eine gelartige Konsistenz, aufweisen.

Zum individuellen Anpassen oder Veredeln des Lebensmittelrohlings 21 umfasst die Lebensmittelzubereitungsvorrichtung 20 gemäß Fig. 1 eine Injektionseinheit 25. Die Injektionseinheit 25 dient zum Einspritzen oder Injizieren von zumindest einem vorbestimmten Injektionsmittel als Zusatzstoff in den Lebensmittelrohling 21. Das jeweilige Injektionsmittel kann zum Beispiel eine Flüssigkeit oder ein viskoelastisches Material sein. Zum Verändern unterschiedlicher Eigenschaften des Lebensmittelrohlings 21 können unterschiedliche Typen eines Injektionsmittels 26 vorgesehen sein. Zum Beispiel kann ein Injektionsmittel zum Verändern einer Farbe vorgesehen sein. Ein weiteres Injektionsmittel 26 kann zum Verändern eines Geschmacks oder Aromas vorgesehen sein. Ein anderes Injektionsmittel 26 kann zum Verändern eines Nährwerts des Lebensmittelrohlings 21 vorgesehen sein. Dadurch können zum Beispiel zusätzliche Proteine oder Vitamine oder sonstige Nährstoffe zugefügt werden. Zu den einzelnen Injektionsmitteltypen können verschiedene Untertypen oder Unterkategorien vorgesehen sein. Zum Beispiel können mehrere Injektionsmittel 26 vom Typ Farbe bereitgestellt sein, die zueinander jeweils unterschiedliche oder verschiedene Farben oder Farbnuancen aufweisen. Entsprechend können mehrere Injektionsmittel 26 vom Typ Geschmack bereitgestellt werden, die jeweils unterschiedliche Aromen zueinander aufweisen. Analog können auch mehrere Injektionsmittel vom Typ Nährwert bereitgestellt werden, die zueinander jeweils unterschiedliche Nährwerte aufweisen.

In Fig. 1 umfasst die Injektionseinheit 25 beispielsweise vier verschiedene Injektionsmittel 26 dargestellt. Natürlich können auch mehr oder weniger verschiedene Injektionsmittel 26 zum Veredeln des Lebensmittelrohlings 21 bereitgestellt und eingesetzt werden.

Zum Steuern oder Betreiben der Injektionseinheit 25 umfasst die Lebensmittelzubereitungsvorrichtung 20 außerdem eine Steuereinrichtung 29. Die Steuereinrichtung 29 kann zum Beispiel als Steuergerät ausgebildet sein. Durch die Steuereinrichtung 29 kann in Abhängigkeit von einem vorgegebenen Auswahlkriterium zum Beispiel das einzuspritzende Injektionsmittel 26 aber beispielsweise auch eine Injektionstiefe oder Injektionsstelle in den zu veredelnden Rohling 21 vorgegeben oder eingestellt werden.

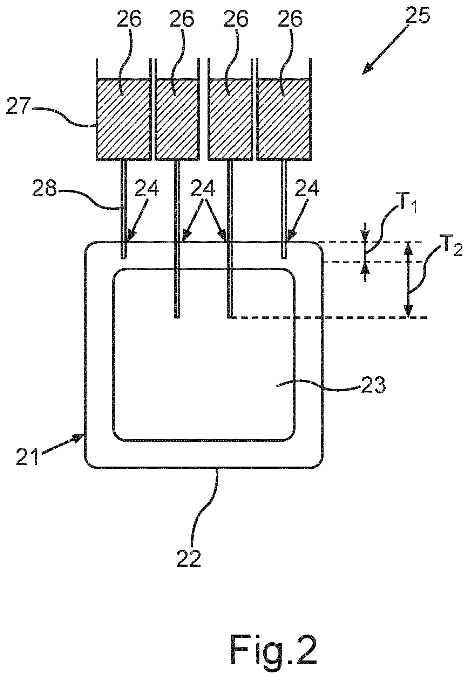

Um die Steuerung der Injektionseinheit 25 näher zu erläutern, wird auf Fig. 2 verwiesen. Fig. 2 zeigt in schematischer Darstellung aus einer Seitansicht in einer Schnittdarstellung einen Lebensmittelrohling 21 und zumindest einen Ausschnitt der Injektionseinheit 25 beim Einspritzen des jeweiligen Injektionsmittels 26. Wie in Fig. 2 gezeigt, ist der Lebensmittelrohling 21 dabei zweischichtig aufgebaut. Das heißt, der Lebensmittelrohling 21 umfasst eine Hüllkomponente 22 und eine Kernkomponente 23. Die Kernkomponente 23, also der Kern, ist dabei von der Hüllkomponente 22, also der Hülle, vollständig umhüllt oder eingefasst. Die Dicke oder Wandstärke der Hüllkomponente 22 kann gemäß dem vorliegenden Ausführungsbeispiel zum Beispiel 0,5 bis 1 Millimeter betragen. Für Hülle und Kern können unterschiedliche Materialzusammensetzungen, also Materialien mit unterschiedlichen Eigenschaften oder Aggregatszuständen, gewählt. Insgesamt kann aber darauf geachtet werden, dass die Hüllkomponente 22 in ihrer Materialzusammensetzung formstabiler ist als die Kernkomponente 23. Somit kann eine besonders einfache Handhabung des Lebensmittelrohlings 21 durch den Nutzer zum Verzehr gewährleistet werden.

In dem Ausführungsbeispiel in Fig. 2 umfasst die Injektionseinheit vier verschiedene Injektionsmittel 26. Für jedes Injektionsmittel 26 umfasst die Injektionseinheit 25 ein eigenes Injektionsmittelreservoir 27, in dem das jeweilige Injektionsmittel 26 gelagert oder vorgehalten ist. Jedem Injektionsmittelreservoir 27 ist ein eigenes Injektionselement 28 zugeordnet. Die Injektionselemente 28 sind vorliegend als Nadeln dargestellt. Beim Ansteuern der Injektionseinheit 25 können die Injektionselemente 28 abgesenkt und in ein Volumen des Lebensmittelrohlings 21 eindringen oder einstechen. Beim Einstechen können die Injektionselemente 28 unterschiedlich weit oder tief in das Volumen des Lebensmittelrohlings 21 eindringen. Somit ergeben sich unterschiedliche Injektionstiefen T1, T2 in denen das jeweilige Injektionsmittel eingespritzt werden kann. Die Injektionstiefe T1 ist dabei der Hüllkomponente 22 zugeordnet. Die Injektionstiefe T2 ist der Kernkomponente 23 zugeordnet.

Zum Einstellen der jeweiligen Injektionstiefe, kann die Steuereinrichtung 29 die Injektionseinheit 25 beziehungsweise das gewünschte Injektionselement 28 ansteuern. Somit kann die Steuereinrichtung 29 vorgeben oder festlegen, ob das jeweilige Injektionsmittel 26 entweder nur in die Kernkomponente 23 oder nur in die Hüllkomponente 22 eingespritzt werden soll. Entsprechend ist die Steuereinrichtung 29 einerseits ausgebildet aus der Vielzahl an Injektionsmitteln 26 eines oder mehrerer zum Veredeln des Lebensmittelrohlings 21 auszuwählen. Andererseits ist die Steuereinrichtung 29 ausgebildet, eine Injektionstiefe T1, T2 in ein Volumen des Lebensmittelrohlings 21 festzulegen.

Zum Realisieren der unterschiedlichen Injektionstiefen T1, T2 weisen die Injektionselemente 28 vorliegend unterschiedliche Nadellängen auf. In der Darstellung in Fig. 2 sind die beiden mittleren Injektionselemente 28 oder Nadeln beispielhaft länger ausgebildet als die beiden äußeren. Dadurch kann durch ein Einstechen in den Lebensmittelrohling 21 eine höhere Injektionstiefe T2 erreicht werden als eine Injektionstiefe T1 mit den beiden äußeren Injektionselementen 28. Durch die geringere Injektionstiefe T1 kann das jeweilige Injektionsmittel 26 somit nur in die Hüllkomponente 22 eingespritzt werden. Durch die tiefere Injektionstiefe T2 wird das jeweilige Injektionsmittel 26 hingegen in die Kernkomponente 23 eingespritzt.

Alternativ zu dem in Fig. 2 dargestellten Ausführungsbeispiel können mehrere Injektionselemente 28 einer Injektionseinheit 25 zum Beispiel gleich lang ausgebildet sein. Die unterschiedlichen Injektionstiefen T1, T2 können dann dadurch realisiert werden, dass die Injektionselemente 28 mittels der Steuereinrichtung 29 separat angesteuert und an sich unterschiedlich tief abgesenkt und in den Lebensmittelrohling 21 eingestochen werden. In einem anderen als dem in Fig. 2 gezeigten Ausführungsbeispiel kann eine Injektionseinheit 25 zum Beispiel nur ein Injektionsmittelreservoir 27 mit einem zugeordneten Injektionselement 28 umfassen.

Zum Injizieren des Injektionsmittels 26 kann die Hüllkomponente 22, wie in Fig. 2 gezeigt, zum Beispiel vorgegebene Injektionspositionen oder Injektionspunkte aufweisen. An den Injektionspositionen weist das Material der Hüllkomponente 22 eine Materialverjüngung auf. Das heißt, die Dicke oder Randstärke des Materials der Hüllkomponente 22 ist an diesen Positionen reduziert. Die jeweilige Injektionsposition kann dabei eine Einstichstelle für das jeweilige Injektionselement 28 darstellen. Die jeweilige Injektionsposition 24 bildet somit eine sogenannte Sollbruchstelle oder Solleinspritzstelle. Durch die geringere Wandstärke kann das Eindringen des Injektionselements 28 und somit der Einspritzvorgang zum Einspritzen des jeweiligen Injektionsmittels 26 besonders einfach erfolgen. Zudem kann dadurch sichergestellt werden, dass zum Beispiel bei Abnutzung des jeweiligen Injektionselements ein Druck auf den Lebensmittelrohling 21, der beim Einspritzvorgang entsteht, weniger wahrscheinlich zu einem Riss oder einer Zerstörung des Lebensmittelrohlings 21 führt.

Die Auswahl des gewünschten Injektionsmittels 26 und die Injektionstiefe T1, T2 erfolgt mittels der Steuereinrichtung 29 in Abhängigkeit von einem vorgegebenen Auswahlkriterium. Das Auswahlkriterium kann zum Beispiel durch Eingabedaten, die durch eine Bedieneingabe durch den Nutzer über eine Eingabevorrichtung erzeugt werden, vorgegeben sein. Die Eingabevorrichtung kann zum Beispiel durch ein bedienfähiges Display in einem Multimediainterface des Kraftfahrzeugs realisiert sein. Somit kann der Nutzer selbst über das Multimediainterface das gewünschte Injektionsmittel oder eine gewünschte Injektionsmittelmischung sowie die Injektionstiefe T1, T2 einstellen. Natürlich kann der Nutzer zum Beispiel über das Multimediainterface auch eine Menge des jeweiligen Injektionsmittels oder ein Mischverhältnis einstellen. Die Eingabedaten können zum Erzeugen von Steuerdaten zum Steuern der Injektionsmitteleinheit 25 von der Eingabevorrichtung an die Steuereinrichtung 29 übermittelt werden. Dazu kann über die Kopplungseinrichtungen 12, 13 neben der mechanischen Kopplung zusätzlich eine drahtgebundene Datenleitung bereitgestellt werden. Alternativ können die Eingabevorrichtung und die Steuereinrichtung 29 entsprechende Kommunikationsmodule, wie zum Beispiel ein Bluetooth-oder NFC(Near Field Communication)-Modul, aufweisen, um eine drahtlose Datenübertragung zu realisieren.

Zusätzlich oder alternativ zu der Nutzereingabe kann das Auswahlkriterium zum Beispiel durch eine vorgegebene Zuordnungsvorschrift vorgegeben sein. Zum Beispiel kann ein Injektionsmittel 26 zum Verändern der Farbe gemäß der Zuordnungsvorschrift nur zum Einspritzen in die Hüllkomponente 22 vorgesehen sein. Hingegen kann ein Injektionsmittel 26 zum Verändern des Geschmacks und/oder des Nährwerts nur zum Einspritzen in die Kernkomponente 23 vorgesehen sein. Dadurch kann zum Beispiel sichergestellt werden, dass die farbveränderlichen Substanzen in dem Lebensmittelrohling 21 immer gut sichtbar sind. Die Zuordnungsvorschrift kann zum Beispiel in einem Programmcode der Steuereinrichtung 29 hinterlegt sein.

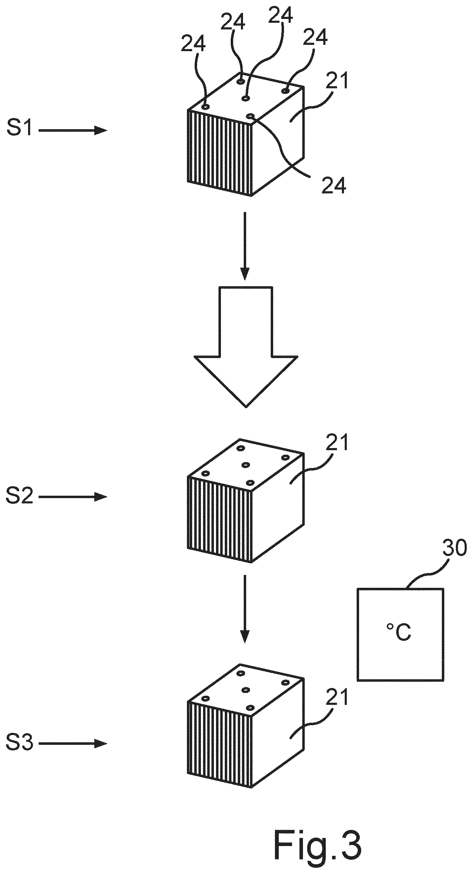

Fig. 3 zeigt schließlich noch in einer schematischen Darstellung beispielhaft einen Verfahrensablauf für ein Verfahren zum Betreiben einer Lebensmittelzubereitungsvorrichtung 20, wie sie zuvor beschrieben wurde. In einem Schritt S1 wird dabei zunächst der Lebensmittelrohling 21 bereitgestellt. Der bereitgestellte Lebensmittelrohling 21 umfasst gemäß der Darstellung in Fig.3 an einer Seitenfläche der Oberfläche beispielhaft fünf Injektionspositionen 24, die die Injektionseinheit 25 als Eintrittsstellen zum Einspritzen des jeweiligen Injektionsmittels 26 nutzen kann. In einem Schritt S2 wird das jeweilige Injektionsmittel 26 ausgewählt und dann in der gewünschten Injektionstiefe T1, T2 in den Lebensmittelrohling 21 eingespritzt. In dem Schritt S3 erfolgt schließlich noch eine Erwärmung oder Erhitzung des Lebensmittelrohlings 21. Dazu kann die Lebensmittelzubereitungsvorrichtung 20 eine Erhitzungseinheit 30 aufweisen. Diese kann mittels der Steuereinrichtung 29 angesteuert werden, um den veredelten Lebensmittelrohling 21 auf einen vorgegebenen Temperaturwert zu erhitzen. Die Erhitzungseinheit 30 kann zum Beispiel nach dem Prinzip eines Backofens funktionieren. Dadurch kann der Lebensmittelrohling 21 abschließend erwärmt, gegrillt, gebacken oder gedämpft werden. Der Temperaturwert, auf den der Lebensmittelrohling 21 erhitzt werden soll, sowie die Art des Garens können zum Beispiel durch das Auswahlkriterium vorgegeben sein. Somit kann zum Beispiel der Nutzer über die Bedieneingabe die entsprechenden Einstellungen vornehmen.

Insgesamt zeigen die vorliegenden Ausführungsbeispiele einen Lebensmittelrohling und dessen Individualisierung in einem Fahrzeug.

## Patentansprüche

1. Verfahren zum Betreiben einer Lebensmittelzubereitungsvorrichtung (20) für ein Kraftfahrzeug (10), folgende Schritte umfassend:
- Bereitstellen von wenigstens einem Lebensmittelrohling (21), der eine Kernkomponente (23) und eine die Kernkomponente (23) umhüllende Hüllkomponente (22) aufweist,
- Bereitstellen zumindest eines vorbestimmten Injektionsmittels (26) zum Einspritzen in den Lebensmittelrohling (21), wobei das jeweilige Injektionsmittel (26) zum Verändern einer Farbe und/oder eines Geschmacks und/oder eines Nährwerts des Lebensmittelrohlings (21) ausgebildet ist, und
- in Abhängigkeit von einem vorgegebenen Auswahlkriterium, Vorgeben einer Injektionstiefe (T1, T2) zum Einspritzen des jeweiligen Injektionsmittels (26) in die Kernkomponente (23) und/oder die Hüllkomponente (22), und
- Einspritzen des jeweiligen Injektionsmittels (26) in der vorgegebenen Injektionstiefe (T1, T2) in den Lebensmittelrohling (21).

2. Verfahren nach Anspruch 1, wobei die Lebensmittelzubereitungsvorrichtung (20) für die Zubereitung des Lebensmittelrohlings (21) in einem Fahrbetrieb des Kraftfahrzeugs (10) mittels einer jeweiligen Kopplungseinrichtung (13) mechanisch mit einer korrespondierenden Kopplungseinrichtung (12) einer Fahrzeugkomponente (11) des Kraftfahrzeugs (10) gekoppelt wird, sodass die Lebensmittelzubereitungsvorrichtung (20) in dem gekoppelten Zustand mit der jeweiligen Fahrzeugkomponente (11) ortsfest fixiert ist.

3. Verfahren nach Anspruch 2, wobei die ortsfeste Fixierung der Lebensmittelzubereitungsvorrichtung (20) mittels einer Verriegelungseinheit der Kopplungseinrichtung (13) durch einen Nutzer entriegelbar und/oder verriegelbar ist.

4. Verfahren nach einem der vorhergehenden Ansprüche, wobei eine Vielzahl an verschiedenen Injektionsmitteln (26) bereitgestellt werden, und in Abhängigkeit von dem vorgegebenen Auswahlkriterium, eines oder mehrere der Vielzahl an Injektionsmitteln (26) zum Einspritzen entweder in die Hüllkomponente (22) oder in die Kernkomponente (23) vorgegeben wird.

5. Verfahren nach einem der vorhergehenden Ansprüche, wobei zum Vorgeben des Auswahlkriteriums Eingabedaten einer zugeordneten Eingabevorrichtung für das Kraftfahrzeug (10) erfasst und ausgewertet werden, wobei den Eingabedaten eine Bedieneingabe eines Nutzers der Eingabevorrichtung zum Auswählen des jeweiligen Injektionsmittels (26) und/oder der Injektionstiefe (T1, T2) zugrunde liegt.

6. Verfahren nach einem der vorhergehenden Ansprüche, wobei zum Vorgeben des Auswahlkriteriums eine vorgegebene Zuordnungsvorschrift berücksichtigt wird, wobei gemäß der Zuordnungsvorschrift ein jeweiliges Injektionsmittel (26) zum Verändern der Farbe nur der Hüllkomponente (22) zugeordnet ist, und ein jeweiliges Injektionsmittel (26) zum Verändern des Geschmacks und/oder des Nährwerts nur der Kernkomponente (23) zugeordnet ist.

7. Verfahren nach einem der vorhergehenden Ansprüche, wobei für die Hüllkomponente (22) eine Materialzusammensetzung bereitgestellt wird, die formstabiler ist als eine Materialzusammensetzung der Kernkomponente (23).

8. Verfahren nach einem der vorhergehenden Ansprüche, wobei zum Einspritzen des jeweiligen Injektionsmittels (26) für die Hüllkomponente (22) zumindest eine vorgegebene Injektionsposition (24) bereitgestellt wird, an welcher jeweils eine vorgegebene Materialverjüngung vorgesehen ist

9. Verfahren nach einem der vorhergehenden Ansprüche, wobei der Lebensmittelrohling (21) in Abhängigkeit von dem vorgegebenen Auswahlkriterium auf einen vorgegebenen Temperaturwert erhitzt wird.

10. Lebensmittelzubereitungsvorrichtung (20) für ein Kraftfahrzeug (10), umfassend
- wenigstens einen Lebensmittelrohling (21), der eine Kernkomponente (23) und eine die Kernkomponente (23) umhüllende Hüllkomponente (22) aufweist,
- eine Injektionseinheit (25) zum Einspritzen zumindest eines vorbestimmten Injektionsmittels (26) in den Lebensmittelrohling (21), wobei das jeweilige Injektionsmittel (26) zum Verändern einer Farbe und/oder eines Geschmacks und/oder eines Nährwerts des Lebensmittelrohlings (21) ausgebildet ist, und
- eine Steuereinrichtung (29), die ausgebildet ist, in Abhängigkeit von einem vorgegebenen Auswahlkriterium eine Injektionstiefe (T1, T2) zum Einspritzen des jeweiligen Injektionsmittels (26) in die Kernkomponente (23) und/oder die Hüllkomponente (22) für die Injektionseinheit (25) vorzugeben.

## Claims

1. Method for operating a food preparation device (20) for a motor vehicle (10), comprising the following steps:
- Providing at least one semi-finished food product (21), which has a core component (23) and a casing component (22) encasing the core component (23),
- Providing at least one predetermined injection agent (26) for injection into the semi-finished food product (21), wherein the respective injection agent (26) is designed to change a color and/or a flavor and/or a nutritional value of the semi-finished food product (21), and
- Specifying an injection depth (T1, T2) for injecting the respective injection agent (26) into the core component (23) and/or the casing component (22) as a function of a specified selection criterion, and
- Injecting the respective injection agent (26) into the semi-finished food product (21) to the specified injection depth (T1, T2).

2. Method according to claim 1, wherein the food preparation device (20) is mechanically coupled to a corresponding coupling device (12) of a vehicle component (11) of the motor vehicle (10) by means of a respective coupling device (13) for preparing the semi-finished food product (21) during operation of the motor vehicle (10), such that the food preparation device (20) is immovably attached to the respective vehicle component (11) in the coupled state.

3. Method according to claim 2, wherein the immovable attachment of the food preparation device (20) can be unlocked and/or locked by a user by means of a locking unit of the coupling device (13).

4. Method according to any one of the preceding claims, wherein a plurality of different injection agents (26) are provided and one or more of the plurality of injection agents (26) is/are specified for injection into the casing component (22) or into the core component (23) as a function of the specified selection criterion.

5. Method according to any one of the preceding claims, wherein input data of an assigned input device for the motor vehicle (10) is gathered and evaluated for specifying the selection criterion, wherein an operator input of a user of the input device is based on the input data for selecting the respective injection agent (26) and/or the injection depth (T1, T2).

6. Method according to any one of the preceding claims, wherein account is taken of a specified assignment rule for specifying the selection criterion wherein, according to the assignment rule, a respective injection agent (26) for changing the color is only assigned to the casing component (22), and a respective injection agent (26) for changing the flavor and/or the nutritional value is only assigned to the core component (23).

7. Method according to any one of the preceding claims, wherein a material composition, which is more dimensionally stable than a material composition of the core component (23), is provided for the casing component (22).

8. Method according to any one of the preceding claims, wherein at least one specified injection position (24) is provided for injecting the respective injection agent (26) for the casing component (22), at which position a specified material taper is provided

9. Method according to any one of the preceding claims, wherein the semi-finished food product (21) is heated to a specified temperature value as a function of the specified selection criterion.

10. Food preparation device (20) for a motor vehicle (10), comprising:
- at least one semi-finished food product (21), which has a core component (23) and a casing component (22) encasing the core component (23),
- an injection unit (25) for injecting at least one predetermined injection agent (26) into the semi-finished food product (21), wherein the respective injection agent (26) is designed to change a color and/or a flavor and/or a nutritional value of the semi-finished food product (21), and
- a control device (29), which is designed to specify an injection depth (T1, T2) for injecting the respective injection agent (26) into the core component (23) and/or the casing component (22) for the injection unit (25), as a function of a specified selection criterion.

## Revendications

1. Procédé pour faire fonctionner un dispositif de préparation d'aliment (20) pour un véhicule à moteur (10), comprenant les étapes suivantes :
- fourniture d'au moins une ébauche d'aliment (21) qui présente un composant central (23) et un composant d'enveloppe (22) enveloppant le composant central (23),
- fourniture d'au moins un moyen d'injection prédéterminé (26) pour l'injection dans l'ébauche d'aliment (21), dans lequel le moyen d'injection respectif (26) est conçu pour modifier une couleur et/ou un goût et/ou une valeur nutritive de l'ébauche d'aliment (21), et
- en fonction d'un critère de sélection prédéfini, définition d'une profondeur d'injection (T1, T2) pour l'injection du moyen d'injection respectif (26) dans le composant central (23) et/ou le composant d'enveloppe (22), et
- injection du moyen d'injection respectif (26) à la profondeur d'injection prédéfinie (T1, T2) dans l'ébauche d'aliment (21).

2. Procédé selon la revendication 1, dans lequel le dispositif de préparation d'aliment (20) est couplé mécaniquement à un appareil de couplage correspondant (12) d'un composant de véhicule (11) du véhicule à moteur (10) au moyen d'un appareil de couplage respectif (13) pour la préparation de l'ébauche d'aliment (21) lors d'une opération de conduite du véhicule à moteur (10), de sorte que le dispositif de préparation d'aliment (20) soit fixé de manière stationnaire dans l'état couplé avec le composant de véhicule respectif (11).

3. Procédé selon la revendication 2, dans lequel la fixation stationnaire du dispositif de préparation d'aliment (20) au moyen d'une unité de verrouillage de l'appareil de couplage (13) peut être déverrouillée et/ou verrouillée par un utilisateur.

4. Procédé selon l'une quelconque des revendications précédentes, dans lequel une pluralité de moyens d'injection (26) différents sont fournis et, en fonction du critère de sélection prédéfini, un ou plusieurs de la pluralité de moyens d'injection (26) sont prédéfinis pour l'injection soit dans le composant d'enveloppe (22), soit dans le composant central (23).

5. Procédé selon l'une quelconque des revendications précédentes, dans lequel, pour prédéfinir le critère de sélection, des données d'entrée d'un dispositif d'entrée associé sont détectées et évaluées pour le véhicule à moteur (10), dans lequel les données d'entrée sont basées sur une entrée de commande d'un utilisateur du dispositif d'entrée pour sélectionner le moyen d'injection respectif (26) et/ou la profondeur d'injection (T1, T2).

6. Procédé selon l'une quelconque des revendications précédentes, dans lequel, pour prédéfinir le critère de sélection, une règle d'attribution prédéfinie est prise en compte, dans lequel, selon la règle d'attribution, un moyen d'injection respectif (26) est attribué pour modifier la couleur uniquement du composant d'enveloppe (22), et un agent d'injection respectif (26) est attribué pour modifier le goût et/ou la valeur nutritive uniquement du composant central (23).

7. Procédé selon l'une quelconque des revendications précédentes, dans lequel une composition de matériau est fournie pour le composant d'enveloppe (22), composition qui est plus stable dimensionnellement qu'une composition de matériau du composant central (23).

8. Procédé selon l'une quelconque des revendications précédentes, dans lequel, pour l'injection du moyen d'injection respectif (26) pour le composant d'enveloppe (22), au moins une position d'injection prédéfinie (24) est prévue, à laquelle un rétrécissement de matériau prédéfini est prévu.

9. Procédé selon l'une quelconque des revendications précédentes, dans lequel l'ébauche d'aliment (21) est chauffée à une valeur de température prédéfinie en fonction du critère de sélection prédéfini.

10. Dispositif de préparation d'aliment (20) pour un véhicule à moteur (10), comprenant
- au moins une ébauche d'aliment (21) qui présente un composant central (23) et un composant d'enveloppe (22) enveloppant le composant central (23),
- une unité d'injection (25) pour l'injection d'au moins un moyen d'injection prédéterminé (26) dans l'ébauche d'aliment (21), dans lequel le moyen d'injection respectif (26) est conçu pour modifier une couleur et/ou un goût et/ou une valeur nutritive de l'ébauche d'aliment (21), et
- un appareil de commande (29), qui est conçu pour déterminer, en fonction d'un critère de sélection prédéfini, une profondeur d'injection (T1, T2) pour l'injection du moyen d'injection respectif (26) dans le composant central (23) et/ou le composant d'enveloppe (22) pour l'unité d'injection (25).
